# EUROPEAN PATENT SPECIFICATION

(11) **EP 3 396 263 B1**
(45) Date of publication and mention of the grant of the patent: **02.09.2020**
(21) Application number: 18167889.7
(22) Date of filing: 18.04.2018
(51) Int. Cl.: F24F 11/30, F24F 110/10, F24F 110/20, F24F 110/50, F24F 110/64, F24F 110/70, F24F 110/76, F24F 120/10, F24F 120/12, F24F 11/89

(54) **MULTISENSOR UNIT, AN ARRANGEMENT AND A METHOD FOR MANAGING THE INDOOR CLIMATE CONDITIONS OF A ROOM OR OF A ZONE**
MULTISENSOREINHEIT, ANORDNUNG UND VERFAHREN ZUR VERWALTUNG DER RAUMKLIMABEDINGUNGEN EINES RAUMES ODER EINER ZONE
UNITÉ MULTICAPTEUR, AGENCEMENT ET PROCÉDÉ PERMETTANT DE GÉRER LES CONDITIONS CLIMATIQUES INTÉRIEURES D'UNE PIÈCE OU D'UNE ZONE

(30) Priority: 18.04.2017 FI 20175350
(43) Date of publication of application: 31.10.2018
(73) Proprietor: Caverion Suomi Oy, 00620 Helsinki (FI)
(72) Inventor: Myyryläinen, Mikko, 00620 Helsinki (FI); Lehtinen, Jukka, 00620 Helsinki (FI); Hentunen, Ari, 00620 Helsinki (FI)
(74) Representative: Kolster Oy Ab

(56) References cited:
- EP-A2- 2 163 832
- EP-A2- 2 407 728
- US-A1- 2012 064 818
- US-A1- 2016 003 493
- US-A1- 2016 116 178

## Description

### FIELD OF THE INVENTION

The invention relates to the field of building and construction technologies in general and to the field of building indoor climate management, and more particularly to a multisensor unit, an arrangement and a method for managing the indoor climate conditions of a room or of a zone.

### BACKGROUND OF THE INVENTION

In the field of building and construction technologies, the indoor climate management is typically handled with different systems in the same building. In the winter and during the cold season a heating system is used to bring heat and warming to the indoor premises. In the summer and during warm/hot weather conditions the building typically has a cooling system or an air conditioning system for providing cool air to the premises of the building. There also can be a separate air ventilation system in the building providing for suitable fresh air to the premises. Also typically, in a building there is a separate lighting system providing light to the premises.

The indoor climate conditions of a room or a zone typically depend on the functioning or all the above mentioned different indoor climate management systems, i.e. a heating system, a cooling system, an air conditioning system, an air ventilation system a lighting system. Each of the said indoor climate management systems typically has control system with relevant sensor arrangements in place.

One example of an indoor climate management system according to the prior art may be seen in European Patent Application document EP 2 407 728 A2, which presents an air conditioner having an indoor unit with a thermopile type infrared sensor for detecting an indoor air temperature, a floor and wall temperature and a ceiling ambient temperature and a control device for controlling the air conditioner. However, the presented prior art air conditioner is only providing temperature measurement data and is not capable managing the indoor climate conditions in relation to the air condition and to air quality.

In prior art, there has been some arrangements where the different indoor climate management systems are somehow coordinated to bring savings and better coordination for the indoor climate management. However, typically each system typically relies on its own sensors for providing the climate management control.

### BRIEF DESCRIPTION OF THE INVENTION

The object of the invention is to introduce a new solution for managing the indoor climate conditions of a room or of a zone, which would provide a simpler design and bring savings. There is a demand in the market for a more straightforward solution for indoor climate condition management of a room or of a zone in a building.

It is brought forward a new multisensor unit for managing the indoor climate conditions of a room or of a zone, which multisensor unit comprises a temperature detector for detecting the temperature in said room or said zone, and a thermal imaging sensor arranged to measure temperatures within its detection range in said room or in said zone, to detect the measured temperatures of the ceiling, wall, floor and/or a window in said room or in said zone and the measured skin temperature of human in said room or in said zone, and to detect the presence and/or position of human in said room or in said zone and/or the number of persons present in said room or in said zone, said multisensor unit is attached to the ceiling of said room or said zone, said multisensor unit furthermore comprises at least one air quality detector for detecting one or more parameters relating to the air condition/air quality and/or to the indoor climate conditions of said room or said zone; which multisensor unit is adapted to provide measurement data for said one or more parameters relating to the air condition/air quality and/or to the indoor climate conditions of said room or of said zone to a control unit, said control unit adapted to control indoor climate conditioning units for managing the indoor climate conditions of said room or of said zone. Hereby, one or more of the above-mentioned advantages and/or objectives are achieved. These advantages and/or objectives are further facilitated with the additional preferred features and/or steps described in the following.

In a preferred embodiment of said multisensor unit, said thermal imaging sensor is an infrared sensor.

In a preferred embodiment of said multisensor unit, said detection range of said thermal imaging sensor is arranged to cover the entire indoor space of said room or of said zone.

In a preferred embodiment of said multisensor unit, said thermal imaging sensor is arranged to detect when said room or in said zone is unoccupied.

In a preferred embodiment of said multisensor unit, said thermal imaging sensor is arranged to detect and provide information on the temperatures of said window for the determination of the outside weather conditions and for the determination whether the curtains, blinds or awnings are covering said window.

In a preferred embodiment of said multisensor unit, said thermal imaging sensor is arranged to detect the temperature gradient in said room or in said zone.

In a preferred embodiment of said multisensor unit, said temperature detector is a thermocouple type temperature detector or a thermopile type temperature detector.

In a preferred embodiment of said multisensor unit, said one or more parameters relating to the air condition/air quality and/or to the indoor climate conditions of said room or of said zone comprise parameters relating e.g. to oxygen content (O₂), to carbon dioxide content (CO₂), to dust particle content, to air purity or to air humidity.

It is also brought forward a new arrangement for managing the indoor climate conditions of a room or of a zone, which arrangement comprises a multisensor unit according to any of claims 1 to 8, which multisensor unit is adapted to provide measurement data for one or more parameters relating to the air condition/air quality and/or to the indoor climate conditions of said room or of said zone, a control unit, and indoor climate conditioning units.

In a preferred embodiment of said arrangement, said indoor climate conditioning units comprise a heating unit, a cooling/air conditioning unit, an air ventilation unit and/or a lighting unit.

It is also brought forward a new method for managing the indoor climate conditions of a room or of a zone, which method comprises the steps of:
- detecting the temperature in said room or said zone with a temperature detector of a multisensor unit according to any of claims 1 to 8, which multisensor unit is attached to the ceiling of said room or said zone,
- detecting one or more parameters relating to the air condition/air quality and/or to the indoor climate conditions of said room or said zone with an at least one air quality detector of said multisensor unit,
- measuring by a thermal imaging sensor of said multisensor unit temperatures within its detection range in said room or in said zone,
- detecting the measured temperatures of the ceiling, wall, floor and/or a window in said room or in said zone by a thermal imaging sensor of said multisensor unit,
- detecting the skin measured temperature of human in said room or in said zone by a thermal imaging sensor of said multisensor unit,
- detecting from said measured temperatures the presence and/or position of human in said room or said zone and/or the number of persons present in said room or in said zone by a thermal imaging sensor of said multisensor unit,
- providing measurement data for said one or more parameters relating to the air condition/air quality and/or to the indoor climate conditions of said room or of said zone by said multisensor unit, and- performing condition management actions by a control unit for controlling indoor climate conditioning units.

### BRIEF DESCRIPTION OF THE DRAWINGS

In the following, the present invention will be described in more detail by way of example and with reference to the attached drawings, in which:
Figure 1 illustrates a sectional view depicting a positional relation between a room or a zone and a multisensor unit according to one embodiment of the present invention.
Figure 2 illustrates a perspective view depicting a relation between an indoor space of a room/zone and a sensing area of a thermal imaging sensor of a multisensor unit according to one embodiment of the present invention.
Figure 3 illustrates a diagrammatic representation depicting another embodiment of an installation of a multisensor unit according to the present invention.
Figure 4 illustrates an arrangement for managing the indoor climate conditions of a room or of a zone according to one embodiment of the present invention.
Figure 5 illustrates a method for managing the indoor climate conditions of a room or of a zone according to one embodiment of the present invention.

The foregoing aspects, features and advantages of the invention will be apparent from the drawings and the detailed description related thereto.

### DETAILED DESCRIPTION

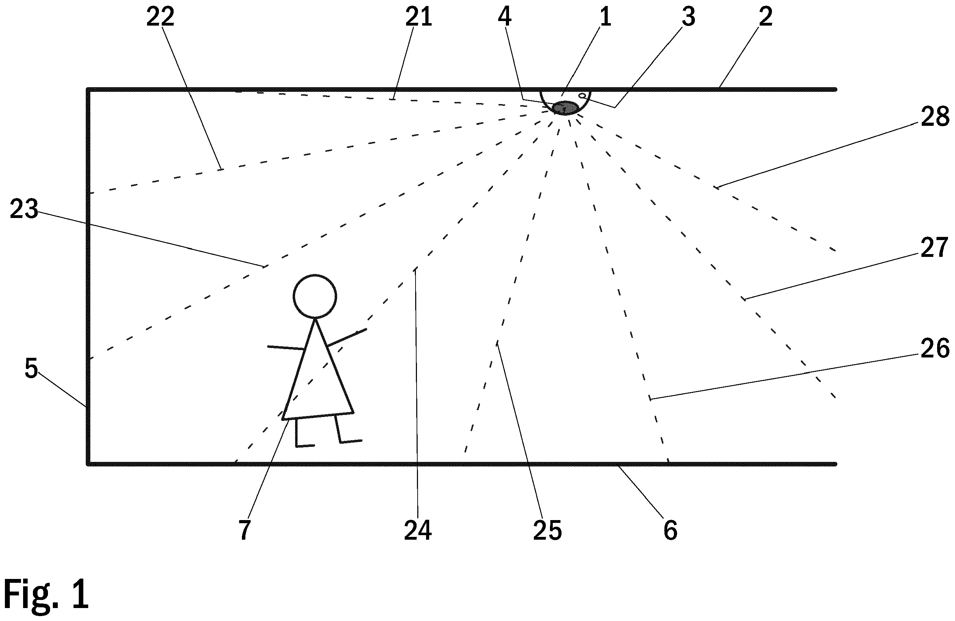

Figure 1 illustrates a sectional view depicting a positional relation between a room or a zone and a multisensor unit according to one embodiment of the present invention. The multisensor unit 1 according to the presented embodiment is attached to the ceiling 2 of a room or a zone. The multisensor unit 1 comprises a temperature detector 3 for detecting the temperature in the room or the zone and a thermal imaging sensor 4 for detecting the presence and/or position of human in the room or in the zone. The temperature detector 3 according to the present invention may e.g. be a thermocouple type temperature detector 3 or a thermopile type temperature detector 3. The thermal imaging sensor 4 according to the present invention may e.g. be an infrared sensor 4. Furthermore, the multisensor unit 1 comprises an at least one air quality detector for detecting parameters relating to the air condition/air quality and/or to the indoor climate conditions of the room or the zone. The said parameters relating to the air condition/air quality may comprise parameters relating e.g. to oxygen content (O₂), to carbon dioxide content (CO₂), to dust particle content, to air purity or to air humidity.

The thermal imaging sensor 4 of the multisensor unit 1 according to the presented embodiment is arranged to measure temperatures within its detection range in a room or in a zone. The said detection range of said thermal imaging sensor 4 may comprise a plurality of ranges 21-28 arranged perpendicularly to a first axial direction within its detection range in a room or in a zone. The detection range of said thermal imaging sensor 4 may allow the thermal imaging sensor 4 to detect temperatures of the ceiling 2 as well as temperatures of the wall 5 and the temperatures of the floor 6 in a room or in a zone. Furthermore, the thermal imaging sensor 4 of the multisensor unit 1 according to the presented embodiment is arranged to detect the presence and/or position of human 7 in the room or in the zone. The thermal imaging sensor 4 of the multisensor unit 1 according to the presented embodiment may also detect the temperature gradient in the room or in the zone. Furthermore, said thermal imaging sensor 4 may detect the skin temperature of human 7 in the room or in the zone. Furthermore, the thermal imaging sensor 4 of the multisensor unit 1 according to the presented embodiment may detect the number of persons present in the room or in the zone. Said thermal imaging sensor 4 may also detect when the room or the zone is unoccupied.

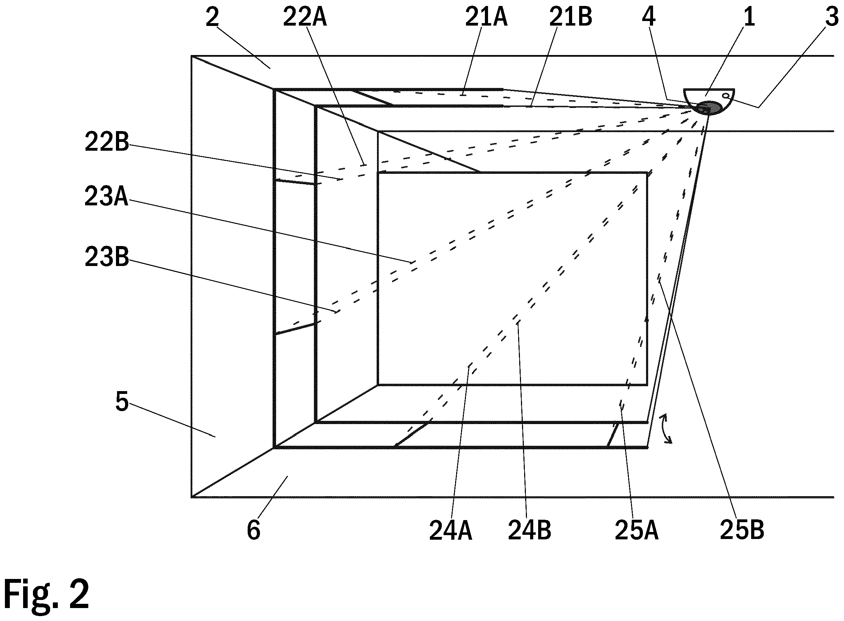

Figure 2 illustrates a perspective view depicting a relation between an indoor space of a room/zone and a sensing area of a thermal imaging sensor of a multisensor unit according to one embodiment of the present invention. The multisensor unit 1 according to the presented embodiment is attached to the ceiling 2 of a room or a zone. The multisensor unit 1 comprises a temperature detector 3 for detecting the temperature in the room or the zone, a thermal imaging sensor 4 for detecting the presence and/or position of human in the room or in the zone and an at least one air quality detector for detecting parameters relating to the air condition/air quality and/or to the indoor climate conditions of the room or the zone.

The thermal imaging sensor 4 of the multisensor unit 1 according to the presented embodiment is arranged to measure temperatures within its detection range in a room or in a zone. The said detection range of said thermal imaging sensor 4 may comprise a plurality of ranges arranged perpendicularly to a first axial direction within its detection range in a room or in a zone. The detection range of said thermal imaging sensor 4 may allow the thermal imaging sensor 4 to detect temperatures of the ceiling 2 as well as temperatures of the wall 5 and the temperatures of the floor 6 in a room or in a zone. As shown in Figure 2, by rotating the thermal imaging sensor 4 gradually from a first axial direction to a second axial direction said detection range of said thermal imaging sensor 4 may comprise a plurality of ranges 21A-21B, 22A-22B, 23A-23B, 24A-24B, 25A-25B arranged perpendicularly to a first axial direction and to a second axial direction within its detection range in a room or in a zone. Likewise, by rotating the thermal imaging sensor 4 360 degrees the detection range of said thermal imaging sensor 4 is arranged to cover the entire indoor space of a room or of a zone. The multisensor unit 1 according to the present invention may be integrated to a ceiling element of the room or of the zone.

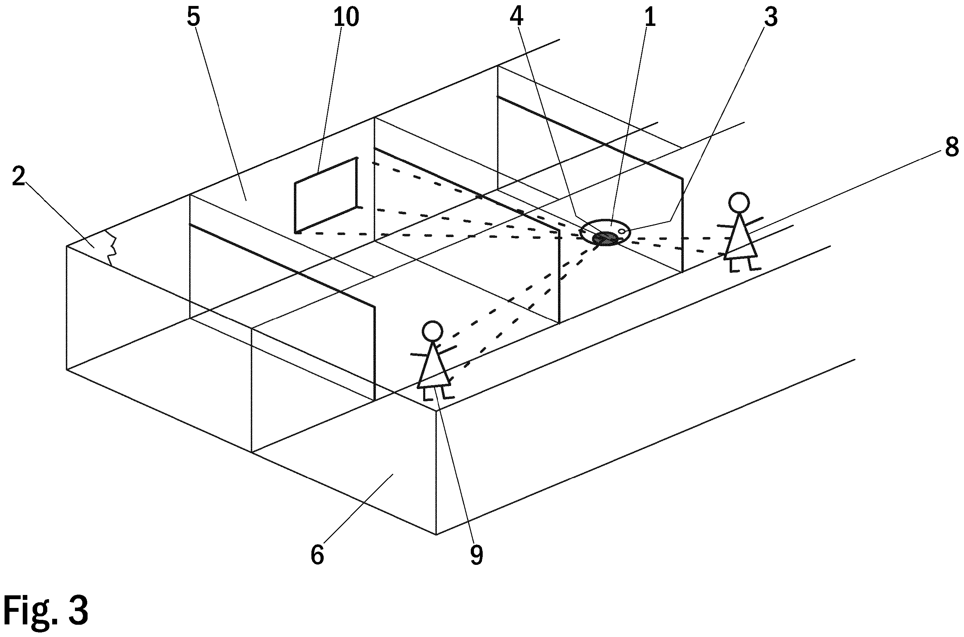

Figure 3 illustrates a diagrammatic representation depicting another embodiment of an installation of a multisensor unit according to the present invention. The multisensor unit 1 according to the presented embodiment is attached to the ceiling 2 of a room or a zone. The multisensor unit 1 according to the presented embodiment is attached to the ceiling 2 of a room or a zone. The multisensor unit 1 comprises a temperature detector 3 for detecting the temperature in the room or the zone, a thermal imaging sensor 4 for detecting the presence and/or position of human in the room or in the zone and an at least one air quality detector for detecting parameters relating to the air condition/air quality and/or to the indoor climate conditions of the room or the zone.

The temperature detector 3 according to the present invention may e.g. be a thermocouple type temperature detector 3 or a thermopile type temperature detector 3. The thermal imaging sensor 4 according to the present invention may e.g. be an infrared sensor 4. Furthermore, the multisensor unit 1 comprises an at least one air quality detector for detecting parameters relating to the air condition/air quality and/or to the indoor climate conditions of the room or the zone. The said parameters relating to the air condition/air quality may comprise parameters relating e.g. to oxygen content (O₂), to carbon dioxide content (CO₂), to dust particle content or to air humidity.

The thermal imaging sensor 4 of the multisensor unit 1 according to the presented embodiment is arranged to measure temperatures within its detection range in a room or in a zone and to detect the presence and/or position of human 8, 9 in the room or in the zone. The detection range of said thermal imaging sensor 4 may allow the thermal imaging sensor 4 to detect temperatures of the ceiling 2 as well as temperatures of the wall 5 and the temperatures of the floor 6 in a room or in a zone.

Furthermore, when detecting temperatures of the wall 5 the thermal imaging sensor 4 of the multisensor unit 1 according to the presented embodiment is also arranged to detect the temperatures of a window 10 on the wall 5 in a room or in a zone. The multisensor unit 1 according to the presented invention may be arranged to detect and provide information on the temperatures of a window 10 for the determination of the outside weather conditions and for the determination, whether the curtains, blinds or awnings are covering the window 10. Furthermore, said multisensor unit 1 may be arranged to detect and provide information on the illumination level in a room or in a zone.

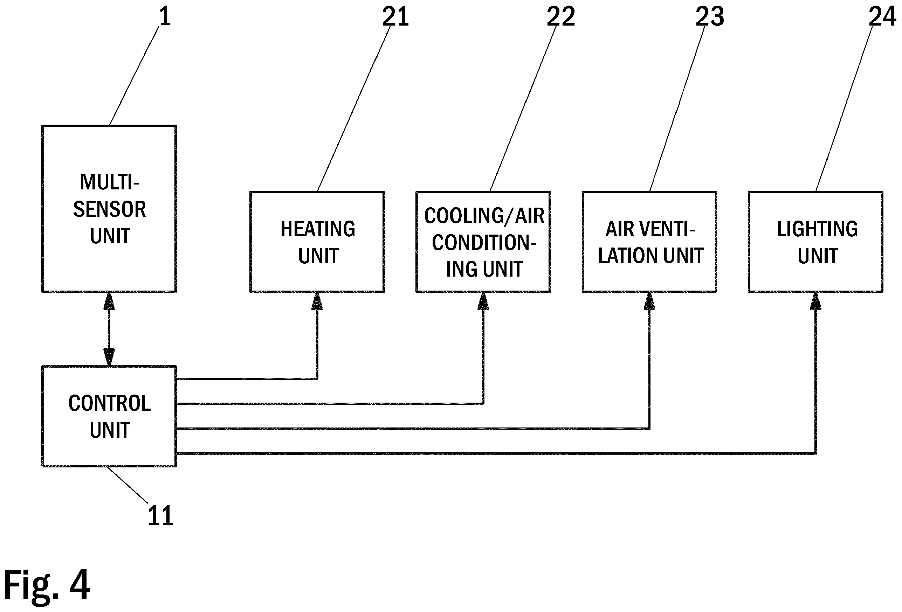

Figure 4 illustrates an arrangement for managing the indoor climate conditions of a room or of a zone according to one embodiment of the present invention. The arrangement for managing the indoor climate conditions of a room or of a zone according to one embodiment of the present invention comprises a multisensor unit 1 attached to the ceiling of a room or a zone, and a control unit 11 for controlling the indoor climate conditions of said room or of said zone. Furthermore, the arrangement for managing the indoor climate conditions of a room or of a zone according to the presented embodiment comprises indoor climate conditioning units 21-24 for managing the indoor climate conditions of said room or of said zone. Said indoor climate conditioning units 21-24 may e.g. comprise a heating unit 21, a cooling/air conditioning unit 22, an air ventilation unit 23 and a lighting unit 24.

In the arrangement for managing the indoor climate conditions of a room or of a zone according to the presented embodiment the multisensor unit 1 is adapted to provide measurement data for one or more parameters relating to the air condition/air quality and/or to the indoor climate conditions of the room or of the zone to the control unit 11 for the management of the indoor climate conditions of the room or of the zone. Furthermore, in the arrangement for managing the indoor climate conditions of a room or of a zone according to the presented embodiment the control unit 11 is arranged to receive said measurement data for one or more parameters relating to the air condition/air quality and/or to the indoor climate conditions of said room or of said zone from the multisensor unit 1 and adapted to control said indoor climate conditioning units 21-24 for managing the indoor climate conditions of said room or of said zone. In the presented embodiment, the control unit 11 is adapted to control the heating unit 21, the cooling/air conditioning unit 22, the air ventilation unit 23 and the lighting unit 24.

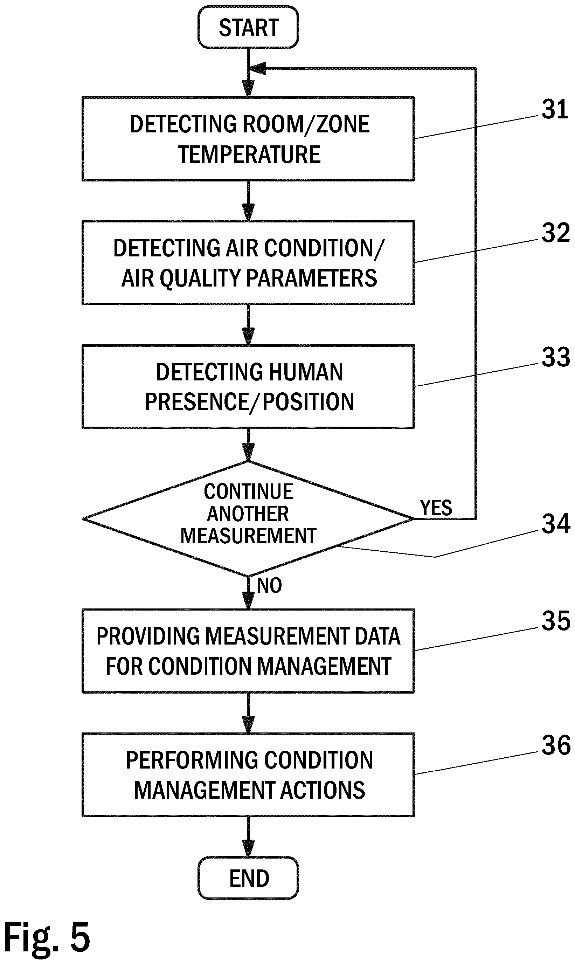

Figure 5 illustrates a method for managing the indoor climate conditions of a room or of a zone according to one embodiment of the present invention. In the method for managing the indoor climate conditions of a room or of a zone according to one embodiment of the present invention the temperature in the room or the zone is detected 31 by the temperature detector 3 of the multisensor unit 1. Also, in said method, parameters relating to the air condition/air quality and/or to the indoor climate conditions of the room or of the zone are detected 32 by said at least one air quality detector of said multisensor unit 1. The said parameters relating to the air condition/air quality may comprise parameters relating e.g. to oxygen content (O₂), to carbon dioxide content (CO₂), to dust particle content or to air humidity.

After carrying out the steps of temperature detecting 31 and air condition/air quality detecting 32 the presence and/or position of human in the room or in the zone is detected 33 by the thermal imaging sensor 4 of the multisensor unit 1.

After carrying out the steps of temperature detecting 31 and air condition/air quality detecting 32, the multisensor unit 1 may or may not continue 34 with another measurement and repeat steps 31-33. The multisensor unit 1 may be instructed to or may be automated to carry out multiple measurements. In said multiple measurements the multisensor unit 1 may e.g. change the scanning pattern and/or scanning frequency of said thermal imaging sensor 4 in the step of detecting 32 the presence and/or position of human in the room or in the zone.

After carrying out enough measurements by repeating the steps 31-33, the multisensor unit 1 provides 35 measurement data for one or more parameters to the control unit 11 for determining the need for condition management of a room or of a zone. After receiving one or more parameters for the determination of the need for condition management of the room or of the zone the control unit 11 performs 36 condition management actions and controls the heating unit 21, a cooling/air conditioning unit 22, an air ventilation unit 23 and/or the lighting unit 24 according to said condition management actions.

With the help of the solution according to the present invention there is provided a new solution for managing the indoor climate conditions of a room or of a zone, which provides a simpler design and bring savings when compared to the prior art indoor climate condition management solutions.

It is to be understood that the above description and the accompanying Figures are only intended to teach the best way known to the inventors to make and use the invention. It will be apparent to a person skilled in the art that the inventive concept can be implemented in various ways. The above-described embodiments of the invention may thus be modified or varied, without departing from the invention, as defined by the appending claims. It is therefore to be understood that the invention and its embodiments are not limited to the examples described above but may vary within the scope of the claims.

## Claims

1. A multisensor unit (1) for managing the indoor climate conditions of a room or of a zone, which multisensor unit (1) comprises:
- a temperature detector (3) for detecting the temperature in said room or said zone, and
- a thermal imaging sensor (4) arranged
- to measure temperatures within its detection range in said room or in said zone,
- to detect the measured temperatures of the ceiling (2), wall (5), floor (6) and/or a window (10) in said room or in said zone and the measured skin temperature of human (7-9) in said room or in said zone, and
- to detect the presence and/or position of human in said room or in said zone and/or the number of persons present in said room or in said zone,
said multisensor unit (1) being **characterized in that** said multisensor unit (1) is attached to the ceiling (2) of said room or said zone, and that said multisensor unit (1) comprises:
- an at least one air quality detector for detecting one or more parameters relating to the air condition/air quality and/or to the indoor climate conditions of said room or said zone;
- which multisensor unit (1) is adapted to provide measurement data for said one or more parameters relating to the air condition/air quality and/or to the indoor climate conditions of said room or of said zone to a control unit (11), said control unit (11) adapted to control indoor climate conditioning units (21-24) for managing the indoor climate conditions of said room or of said zone.

2. A multisensor unit (1) according to claim 1, wherein said thermal imaging sensor (4) is an infrared sensor (4).

3. A multisensor unit (1) according to claim 1 or to claim 2, wherein said detection range of said thermal imaging sensor (4) is arranged to cover the entire indoor space of said room or of said zone.

4. A multisensor unit (1) according to any of the preceding claims 1-3, wherein said thermal imaging sensor (4) is arranged to detect when said room or in said zone is unoccupied.

5. A multisensor unit (1) according to any of the preceding claims 1-4, wherein said thermal imaging sensor (4) is arranged to detect and provide information on the temperatures of said window (10) for the determination of the outside weather conditions and for the determination whether the curtains, blinds or awnings are covering said window (10).

6. A multisensor unit (1) according to any of the preceding claims 1-5, wherein said thermal imaging sensor (4) is arranged to detect the temperature gradient in said room or in said zone.

7. A multisensor unit (1) according to any of the preceding claims 1-6, wherein said temperature detector (3) is a thermocouple type temperature detector (3) or a thermopile type temperature detector (3).

8. A multisensor unit (1) according to any of the preceding claims 1-7, wherein said one or more parameters relating to the air condition/air quality and/or to the indoor climate conditions of said room or of said zone comprise parameters relating e.g. to oxygen content (O₂), to carbon dioxide content (CO₂), to dust particle content, to air purity or to air humidity.

9. An arrangement for managing the indoor climate conditions of a room or of a zone, which arrangement comprises:
- a multisensor unit (1) according to any of claims 1 to 8 attached to the ceiling (2) of said room or said zone, which multisensor unit (1) is adapted to provide measurement data for one or more parameters relating to the air condition/air quality and/or to the indoor climate conditions of said room or of said zone,
- a control unit (11), and
- indoor climate conditioning units (21-24).

10. A arrangement according to claim 9, wherein said indoor climate conditioning units (21-24) comprise a heating unit (21), a cooling/air conditioning unit (22), an air ventilation unit (23) and/or a lighting unit (24).

11. An method for managing the indoor climate conditions of a room or of a zone, which method comprises the steps of:
- detecting (31) the temperature in said room or said zone with a temperature detector (3) of a multisensor unit (1) according to any of claims 1 to 8, which multisensor unit (1) is attached to the ceiling (2) of said room or said zone,
- detecting (32) one or more parameters relating to the air condition/air quality and/or to the indoor climate conditions of said room or said zone with an at least one air quality detector of said multisensor unit (1),
- measuring by a thermal imaging sensor (4) of said multisensor unit (1) temperatures within its detection range in said room or in said zone,
- detecting the measured temperatures of the ceiling (2), wall (5), floor (6) and/or a window (10) in said room or in said zone by a thermal imaging sensor (4) of said multisensor unit (1),
- detecting the skin measured temperature of human (7-9) in said room or in said zone by a thermal imaging sensor (4) of said multisensor unit (1),
- detecting (33) from said measured temperatures the presence and/or position of human in said room or said zone and/or the number of persons present in said room or in said zone by a thermal imaging sensor (4) of said multisensor unit (1),
- providing (35) measurement data for said one or more parameters relating to the air condition/air quality and/or to the indoor climate conditions of said room or of said zone by said multisensor unit (1), and
- performing (36) condition management actions by a control unit (11) for controlling indoor climate conditioning units (21-24).

## Patentansprüche

1. Multisensoreinheit (1) zum Verwalten der Innenraumklimabedingungen eines Raums oder einer Zone, wobei die Multisensoreinheit (1) Folgendes umfasst:
- einen Temperaturdetektor (3) zum Detektieren der Temperatur in dem Raum oder in der Zone, und
- einen Wärmebildgebungssensor (4), der zu Folgendem angeordnet ist
- Messen von Temperaturen in seinem Detektionsbereich in dem Raum oder in der Zone,
- Detektieren der gemessenen Temperaturen der Decke (2), der Wand (5), des Bodens (6) und/oder eines Fensters (10) in dem Raum oder in der Zone und der gemessenen Hauttemperatur eines Menschen (7-9) in dem Raum oder in der Zone, und
- Detektieren der Anwesenheit und/oder der Position eines Menschen in dem Raum oder in der Zone und/oder der Anzahl von Personen, die in dem Raum oder in der Zone anwesend sind,
wobei die Multisensoreinheit (1) **dadurch gekennzeichnet ist, dass** die Multisensoreinheit (1) an der Decke (2) des Raums oder der Zone befestigt ist und dass die Multisensoreinheit (1) Folgendes umfasst:
- mindestens einen Luftqualitätsdetektor zum Detektieren von einem oder mehreren Parametern, die die Luftbedingung/Luftqualität und/oder die Innenraumklimabedingungen des Raums oder der Zone betreffen;
- wobei die Multisensoreinheit (1) angepasst ist, einer Steuereinheit (11) Messdaten für den einen oder die mehreren Parameter, die die Luftbedingung/Luftqualität und/oder die Innenraumklimabedingungen des Raums oder der Zone betreffen, bereitzustellen, wobei die Steuereinheit (11) angepasst ist, Innenraumklimatisierungseinheiten (21-24) zum Verwalten der Innenraumklimabedingungen des Raums oder der Zone zu steuern.

2. Multisensoreinheit (1) nach Anspruch 1, wobei der Wärmebildgebungssensor (4) ein Infrarotsensor (4) ist.

3. Multisensoreinheit (1) nach Anspruch 1 oder Anspruch 2, wobei der Detektionsbereich des Wärmebildgebungssensors (4) angeordnet ist, den gesamten Innenraum des Raums oder der Zone abzudecken.

4. Multisensoreinheit (1) nach einem der vorhergehenden Ansprüche 1 bis 3, wobei der Wärmebildgebungssensor (4) angeordnet ist zu detektieren, wenn der Raum oder die Zone unbelegt ist.

5. Multisensoreinheit (1) nach einem der vorhergehenden Ansprüche 1 bis 4, wobei der Wärmebildgebungssensor (4) angeordnet ist, zur Bestimmung der äußeren Witterungsbedingungen und zur Bestimmung, ob die Vorhänge, Jalousien oder Markisen das Fenster (10) abdecken, die Temperaturen des Fensters (10) zu detektieren und Informationen über dieselben bereitzustellen.

6. Multisensoreinheit (1) nach einem der vorhergehenden Ansprüche 1 bis 5, wobei der Wärmebildgebungssensor (4) angeordnet ist, den Temperaturgradienten in dem Raum oder in der Zone zu detektieren.

7. Multisensoreinheit (1) nach einem der vorhergehenden Ansprüche 1 bis 6, wobei der Temperaturdetektor (3) ein Thermoelementtemperaturdetektor (3) oder ein Thermosäulentemperaturdetektor (3) ist.

8. Multisensoreinheit (1) nach einem der vorhergehenden Ansprüche 1 bis 7, wobei der eine oder die mehreren Parameter, die die Luftbedingung/Luftqualität und/oder die Innenraumklimabedingungen des Raums oder der Zone betreffen, Parameter umfassen, die z. B. einen Sauerstoffgehalt (O₂), einen Kohlendioxidgehalt (CO₂), einen Staubpartikelgehalt, eine Luftreinheit oder eine Luftfeuchtigkeit betreffen.

9. Anordnung zum Verwalten der Innenraumklimabedingungen eines Raums oder einer Zone, wobei die Anordnung Folgendes umfasst:
- eine Multisensoreinheit (1) nach einem der Ansprüche 1 bis 8, die an der Decke (2) des Raums oder der Zone befestigt ist, wobei die Multisensoreinheit (1) angepasst ist, Messdaten für einen oder mehrere Parameter, die die Luftbedingung/Luftqualität und/oder die Innenraumklimabedingungen des Raums oder der Zone betreffen, bereitzustellen,
- eine Steuereinheit (11), und
- Innenraumklimatisierungseinheiten (21-24).

10. Anordnung nach Anspruch 9, wobei die Innenraumklimatisierungseinheiten (21-24) eine Heizeinheit (21), eine Kühl-/Klimatisierungseinheit (22), eine Belüftungseinheit (23) und/oder eine Beleuchtungseinheit (24) umfassen.

11. Verfahren zum Verwalten der Innenraumklimabedingungen eines Raums oder einer Zone, wobei das Verfahren die folgenden Schritte umfasst:
- Detektieren (31) der Temperatur in dem Raum oder in der Zone mit einem Temperaturdetektor (3) einer Multisensoreinheit (1) nach einem der Ansprüche 1 bis 8, wobei die Multisensoreinheit (1) an der Decke (2) des Raums oder der Zone befestigt ist,
- Detektieren (32) von einem oder mehreren Parametern, die die Luftbedingung/Luftqualität und/oder die Innenraumklimabedingungen des Raums oder der Zone betreffen, mit mindestens einem Luftqualitätsdetektor der Multisensoreinheit (1),
- mit einem Wärmebildgebungssensor (4) der Multisensoreinheit (1) Messen von Temperaturen in seinem Detektionsbereich in dem Raum oder in der Zone,
- Detektieren der gemessenen Temperaturen der Decke (2), der Wand (5), des Bodens (6) und/oder eines Fensters (10) in dem Raum oder in der Zone durch einen Wärmebildgebungssensor (4) der Multisensoreinheit (1),
- Detektieren der gemessenen Hauttemperatur eines Menschen (7-9) in dem Raum oder in der Zone durch einen Wärmebildgebungssensor (4) der Multisensoreinheit (1),
- Detektieren (33) der Anwesenheit und/oder der Position eines Menschen in dem Raum oder in der Zone und/oder der Anzahl von Personen, die in dem Raum oder in der Zone anwesend sind, durch einen Wärmebildgebungssensor (4) der Multisensoreinheit (1) anhand der gemessenen Temperaturen,
- Bereitstellen (35) von Messdaten für den einen oder die mehreren Parameter, die die Luftbedingung/Luftqualität und/oder die Innenraumklimabedingungen des Raums oder der Zone betreffen, durch die Multisensoreinheit (1), und
- Durchführen (36) von Bedingungsverwaltungsmaßnahmen durch eine Steuereinheit (11) zum Steuern von Innenraumklimatisierungseinheiten (21-24).

## Revendications

1. Unité multicapteur (1) permettant de gérer les conditions climatiques intérieures d'une pièce ou d'une zone, laquelle unité multicapteur (1) comprend :
- un détecteur de température (3) permettant de détecter la température dans ladite pièce ou ladite zone, et
- un capteur d'imagerie thermique (4) conçu
- pour mesurer des températures à l'intérieur de sa portée de détection dans ladite pièce ou dans ladite zone,
- pour détecter les températures mesurées du plafond (2), du mur (5), du sol (6) et/ou d'une fenêtre (10) dans ladite pièce ou dans ladite zone et la température cutanée mesurée d'un être humain (7 - 9) dans ladite pièce ou dans ladite zone, et
- pour détecter la présence et/ou la position d'un être humain dans ladite pièce ou dans ladite zone et/ou le nombre de personnes présentes dans ladite pièce ou dans ladite zone,
ladite unité multicapteur (1) étant **caractérisée en ce que** ladite unité multicapteur (1) est fixée au plafond (2) de ladite pièce ou de ladite zone, et **en ce que** ladite unité multicapteur (1) comprend :
- au moins un détecteur de qualité de l'air permettant de détecter un ou plusieurs paramètres se rapportant à la condition de l'air/à la qualité de l'air et/ou aux conditions climatiques intérieures de ladite pièce ou de ladite zone ;
- laquelle unité multicapteur (1) est adaptée pour fournir des données de mesure pour lesdits un ou plusieurs paramètres se rapportant à la condition de l'air/à la qualité de l'air et/ou aux conditions climatiques intérieures de ladite pièce ou de ladite zone à une unité de commande (11), ladite unité de commande (11) étant adaptée pour commander des unités de conditionnement climatique intérieures (21 - 24) permettant de gérer les conditions climatiques intérieures de ladite pièce ou de ladite zone.

2. Unité multicapteur (1) selon la revendication 1, dans laquelle ledit capteur d'imagerie thermique (4) est un capteur infrarouge (4).

3. Unité multicapteur (1) selon la revendication 1 ou la revendication 2, dans laquelle ladite portée de détection dudit capteur d'imagerie thermique (4) est conçue pour couvrir la totalité de l'espace intérieur de ladite pièce ou de ladite zone.

4. Unité multicapteur (1) selon l'une quelconque des revendications 1 à 3 précédentes, dans laquelle ledit capteur d'imagerie thermique (4) est conçu pour détecter le moment auquel ladite pièce ou ladite zone est inoccupée.

5. Unité multicapteur (1) selon l'une quelconque des revendications 1 à 4 précédentes, dans laquelle ledit capteur d'imagerie thermique (4) est conçu pour détecter et fournir des informations sur les températures de ladite fenêtre (10) pour la détermination des conditions météorologiques extérieures et pour la détermination permettant de savoir si les rideaux, les stores ou les auvents recouvrent ladite fenêtre (10).

6. Unité multicapteur (1) selon l'une quelconque des revendications 1 à 5 précédentes, dans laquelle ledit capteur d'imagerie thermique (4) est conçu pour détecter le gradient de température dans ladite pièce ou dans ladite zone.

7. Unité multicapteur (1) selon l'une quelconque des revendications 1 à 6 précédentes, dans laquelle ledit détecteur de température (3) est un détecteur de température de type thermocouple (3) ou un détecteur de température de type thermopile (3).

8. Unité multicapteur (1) selon l'une quelconque des revendications 1 à 7 précédentes, dans laquelle lesdits un ou plusieurs paramètres se rapportant à la condition de l'air/à la qualité de l'air et/ou aux conditions climatiques intérieures de ladite pièce ou de ladite zone comprennent des paramètres se rapportant par ex. à la teneur en oxygène (O₂), à la teneur en dioxyde de carbone (CO₂), à la teneur en particules de poussière, à la pureté de l'air ou à l'humidité de l'air.

9. Agencement permettant de gérer les conditions climatiques intérieures d'une pièce ou d'une zone, lequel agencement comprend :
- une unité multicapteur (1) selon l'une quelconque des revendications 1 à 8 fixée au plafond (2) de ladite pièce ou de ladite zone, laquelle unité multicapteur (1) est adaptée pour fournir des données de mesure pour un ou plusieurs paramètres se rapportant à la condition de l'air/à la qualité de l'air et/ou aux conditions climatiques intérieures de ladite pièce ou de ladite zone,
- une unité de commande (11), et
- des unités de conditionnement climatique intérieures (21 - 24) .

10. Agencement selon la revendication 9, dans lequel lesdites unités de conditionnement climatique intérieures (21 - 24) comprennent une unité de chauffage (21), une unité de refroidissement/de conditionnement de l'air (22), une unité de ventilation de l'air (23) et/ou une unité d'éclairage (24).

11. Procédé permettant de gérer les conditions climatiques intérieures d'une pièce ou d'une zone, lequel procédé comprend les étapes de :
- la détection (31) de la température dans ladite pièce ou ladite zone avec un détecteur de température (3) d'une unité multicapteur (1) selon l'une quelconque des revendications 1 à 8, laquelle unité multicapteur (1) est fixée au plafond (2) de ladite pièce ou de ladite zone,
- la détection (32) d'un ou de plusieurs paramètres se rapportant à la condition de l'air/à la qualité de l'air et/ou aux conditions climatiques intérieures de ladite pièce ou de ladite zone avec au moins un détecteur de qualité de l'air de ladite unité multicapteur (1),
- la mesure, par un capteur d'imagerie thermique (4) de ladite unité multicapteur (1), de températures à l'intérieur de sa portée de détection dans ladite pièce ou dans ladite zone,
- la détection des températures mesurées du plafond (2), du mur (5), du sol (6) et/ou d'une fenêtre (10) dans ladite pièce ou dans ladite zone par un capteur d'imagerie thermique (4) de ladite unité multicapteur (1),
- la détection de la température cutanée mesurée d'un être humain (7 - 9) dans ladite pièce ou dans ladite zone par un capteur d'imagerie thermique (4) de ladite unité multicapteur (1),
- la détection (33), à partir desdites températures mesurées, de la présence et/ou de la position d'un être humain dans ladite pièce ou ladite zone et/ou du nombre de personnes présentes dans ladite pièce ou dans ladite zone par un capteur d'imagerie thermique (4) de ladite unité multicapteur (1),
- la fourniture (35) de données de mesure pour lesdits un ou plusieurs paramètres se rapportant à la condition de l'air/à la qualité de l'air et/ou aux conditions climatiques intérieures de ladite pièce ou de ladite zone par ladite unité multicapteur (1), et
- la réalisation (36) d'actions de gestion de conditions par une unité de commande (11) permettant de commander des unités de conditionnement climatique intérieures (21 - 24).
